# EUROPEAN PATENT APPLICATION

(11) **EP 4 272 556 A1**
(43) Date of publication of application: **08.11.2023**
(21) Application number: 23171315.7
(22) Date of filing: 03.05.2023
(51) Int. Cl.: A01N 25/02, A01N 25/34, A01N 43/36, A01P 1/00, A01N 33/04

(54) **COVALENTLY BOUND DIAMINES AND THEIR USE**

(30) Priority: 06.05.2022 EP 22172141
(71) Applicant: Eberhard Karls Universität Tübingen, 72076 Tübingen (DE)
(72) Inventor: HIRT, Bernhard, 72070 Tübingen (DE); FEIL, Gerhard, 72076 Tübingen (DE); KALBACHER, Hubert, 72070 Tübingen (DE); PIETRZIK, Nikolas, 72076 Tübingen (DE); GLEISER, Corinna, 72108 Rottenburg a. N. (DE); JUST, Lothar, 72076 Tübingen (DE)
(74) Representative: König Szynka Tilmann von Renesse Patentanwälte Partnerschaft mbB Düsseldorf

(57) **Abstract**

The invention provides a product of formula (I) with a diamine backbone, in particular a 1,3-diamino propane backbone, covalently bound to a substrate via a linker. The covalent bonding is via a primary or an acyclic secondary amino group of the diamine backbone, preferably of the 1,3-diamino propane backbone. The invention also relates to its preparation starting from a compound of formula (II) and the use of the product of formula (I) for interfering with the function and/or the structure of a polypeptide, preferably an enzyme. Preferably, the coupled diamine still provides biocidal activity. The products of formula (I) allow for an advantageous long-term stability and thus a reduced risk of leaching and undesired rinse-off of the diamine backbone and biocides, respectively.

## Description

The invention provides a product of formula (I) obtained by covalently binding diamines to a substrate via a linker, its use for interfering with the function and/or the structure of a polypeptide as well as a method for preparing said product comprising the step of reacting a compound of formula (II) with a linking agent and optionally reacting the obtained reaction product with a substrate. The invention also relates to the use of a compound of formula (II) for preparing a product of formula (I). Preferably, the covalently bound diamines still provide biocidal activity, in particular activity in interfering with the function and/or the structure of a polypeptide. The products of formula (I) provide a highly beneficial long-term stability with reduced risk of leaching and undesired rinse-off of the diamines and allow for an improved weatherability and hydrolysis resistance.

### Background of the Invention

Derivatives of 1,3-diamino propanes have long been used for disinfecting purposes and are contained in formulations for microbial control. Commercially available diamines with biocidal activity include "C12", i.e. *N*-dodecyl-1,3-diamino propane (C₁₅H₃₄N₂; molecular weight 242.45; CAS 5538-95-4) and "Bis-C12", i.e. *N*'-(3-aminopropyl)-*N*'-n-dodecyl-1,3-diamino propane (C₁₈H₄₁N₃; molecular weight 299.54; CAS 2372-82-9).

Biocidal agents are, however, often associated with a negative environmental toxicological potential. Therefore, binding those agents including their immobilization is of great interest, yet technologically challenging.

Available techniques can be distinguished by the way in which this is achieved, namely by covalent binding (coupling) on the one hand and by adhesive interaction based on effects such as, e.g. ion binding or van der Waals forces on the other hand.

Respective adhesive techniques, i.e. based on non-covalent interactions, often suffer from inadvertent and uncontrollable leaching, reduced weatherability and reduced hydrolysis resistance.

This is exacerbated by the fact that diamines like 1,3-diamino propane derivatives possess different physical characteristics such as solubility in aqueous and non-aqueous media and adhesive behaviour towards surfaces. In addition, depending on the specifically intended use of the diamines, their physical and chemical features, such as solubility and liquid phases (states of matter), can be of tremendous importance. On the one hand, liquid phase and fluidic parameters are important for technical process management. On the other hand, good solubility can cause problems like leaching or undesired rinse-off.

This can have severe consequences since many 1,3-diamino propane derivatives are toxic or ecotoxic chemicals and their release into soil or water should thus be avoided or at least minimized. Hence, rinsing off such species when getting into contact with water is an issue, e.g. in outdoor applications, and causes high expenses and efforts concerning facility infrastructures and wastewater management, among others.

A frequently used method to circumvent the problem of leaching is covalent bond formation. In contrast to adhesive techniques, which are only based on comparatively weak interactions, in techniques based on covalent bond formation, substrate and active ingredient are bound by at least one chemically strong bond reducing the risk of leaching and undesired rinse-off.

This requires the binding partner as well as the then covalently bound diamines to have suitable structural units to enable covalent coupling in the first place.

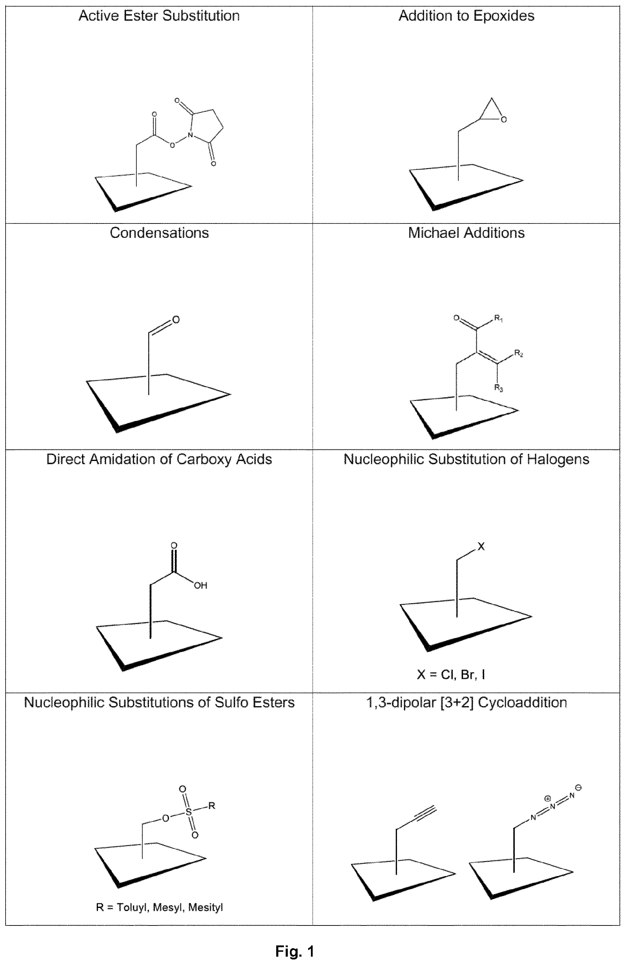

During the last decades broad varieties of techniques have been developed to bind chemical entities to surfaces (see e.g. Fig. 1). The covalent bond between covalently bound chemical entities and the binding partner is in most cases based on a two-centre two-electron bond type. In fact, either the covalently bound chemical entity or the binding partner requires certain functionalities and chemical activation in order to obtain the necessary reactivity to undergo the coupling reaction. Such reactive functionalities of the binding partner are often reacted with electron rich acceptor units from the side of the covalently bound chemical entities. The coupling steps are primarily substitution and addition type reactions.

For 5-oxo-pyrrolidine-2-carboxylic acid derivatives such as Py-C12 (5-*N*-carboxamido-2-pyrrolidone-*N*'-n-dodecyl propane-1,3-diamine) and Py-C14 (5-*N*-carboxamido-2-pyrrolidone-*N*'-n-tetradecyl propane-1,3-diamine), the possibility of coupling, i.e. covalent binding, via its heterocyclic oxo-pyrrolidine ring has been raised in WO 2016/016168 A1 and WO 2016/016167 A1. For this purpose, a modification of the oxo-pyrrolidine ring beforehand is required, namely at positions 3 and/or 4, with functional groups that allow subsequent coupling. Covalent binding via carbon atoms in a head group of the diamines, namely via carbon atoms in a terminal heterocyclic oxo-pyrrolidine ring that need to be modified with functional groups, is described therein.

However, covalently bound diamines like propylenediamines are expected to lose their protein denaturation and biocidal functionalities, respectively, once coupled.

There is thus a need for efficient and reliable approaches of applying biocides to a surface with them retaining their active properties and while ensuring long-term stability without leaching and rinse-off of the biocides.

It is an object of the present invention to provide compounds and methods by which diamines, in particular propylenediamines, can readily and in particular persistently be applied to surfaces without losing their biocidal activity. Respective materials are highly beneficial for numerous applications.

Surprisingly, the inventors found that diamines, in particular 1,3-diamino propanes, can be coupled, i.e. bound covalently via an acyclic secondary or primary amino group of the diamine in an efficient and reliable manner to numerous substrates and with beneficial long-term stability without losing their protein denaturation and biocidal functionalities. The inventors unexpectedly found that diamines like propylenediamines coupled in this way even maintain protein denaturation and biocidal functionalities.

### Short Description of the Invention

The present invention provides a product obtained by covalent coupling of a diamine backbone to a substrate via a linker. This is reflected in the below formula (I) by the fact that either at least R² or R³ is L-S and/or at least one of R⁵, R⁶ and R⁷ is NH-L-S. S is a substrate and L is a linker, wherein L can be separate from or can form part of S. The below formula (I) also defines that this covalent bond is achieved via a primary and/or an acyclic secondary amine of the diamine backbone.

The product has a formula (I): 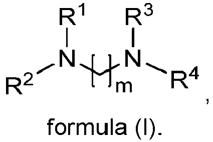
m is an integer from 1 to 6, preferably m is 3. R¹ is H.
R² and R³ are each independently selected from H, a polar protic or polar aprotic substituent independently selected from a saccharide, a polyalcohol, a nucleic acid, an amino acid or an amino acid derivative, a peptide, a protein or a protein derivative, a heterocyclic compound, an organic acid, including a carboxylate, a sulfonate, a phosphate, or a substituent selected from CH₃, C₂H₅, 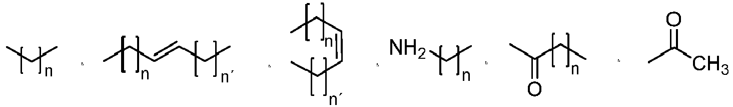 or 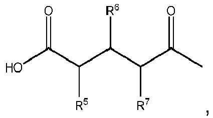 or L-S with L being a linker and S being a substrate.

One of R⁵, R⁶ or R⁷ is NH₂ or NH-L-S, and the other are H.

n and n' are each independently an integer from 1 to 25.

Either at least R² or R³ is L-S and/or at least one of R⁵, R⁶ and R⁷ is NH-L-S.

R⁴ is selected from H, CH₃, C₂H₅, 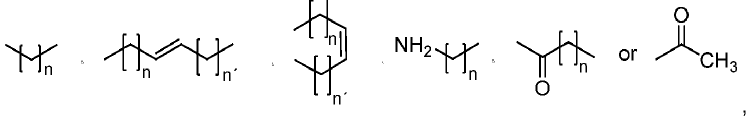 with n and n' each being independently an integer from 1 to 25.

In a further aspect, the present invention provides a method for preparing a product of formula (I).

The method comprises a step (a) of reacting, preferably incubating, a compound of formula (II) 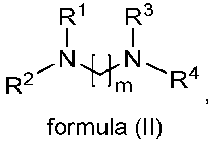 with
m being an integer from 1 to 6, preferably m being 3; and
R¹ being H; and
R² and R³ being independently selected from H, a polar protic or polar aprotic substituent independently selected from a saccharide, a polyalcohol, a nucleic acid, an amino acid or an amino acid derivative, a peptide, a protein or a protein derivative, a heterocyclic compound, an organic acid, including a carboxylate, a sulfonate, a phosphate, or a substituent selected from CH₃, C₂H₅, 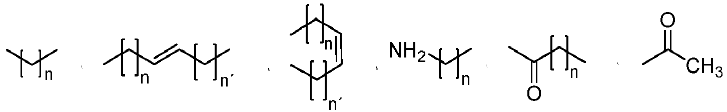 or 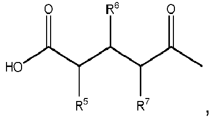 with one of R⁵, R⁶ and R⁷ being NH₂, and the other being H, and with n and n' being an integer from 1 to 25 and with R⁴ being independently selected from H, CH₃, C₂H₅, 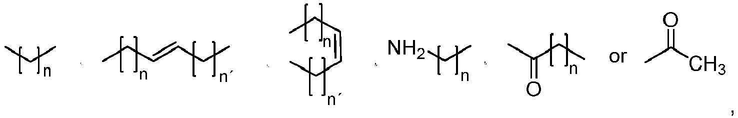
with n and n' being an integer from 1 to 25,
with a linking agent and optionally with a reducing agent. The method optionally further comprises a step (b) of reacting the product of step (a) with a substrate.

The present invention also provides a product of formula (I) preparable or prepared by the method described above and the use of a compound of formula (II) as described above for preparing a product of formula (I).

Also provided is the use of a product of formula (I) as described above for interfering with the function and/or the structure of a polypeptide.

Preferred embodiments are described in the dependent claims.

### Short Description of the Figures

- Figure 1:: Common means of covalent solid phase coupling with different linking agents. The squares are representing the substrate.
- Figure 2:: Unit derived from pentaerythritol for dendrimer build up for forming a dendrimer type linking agent.

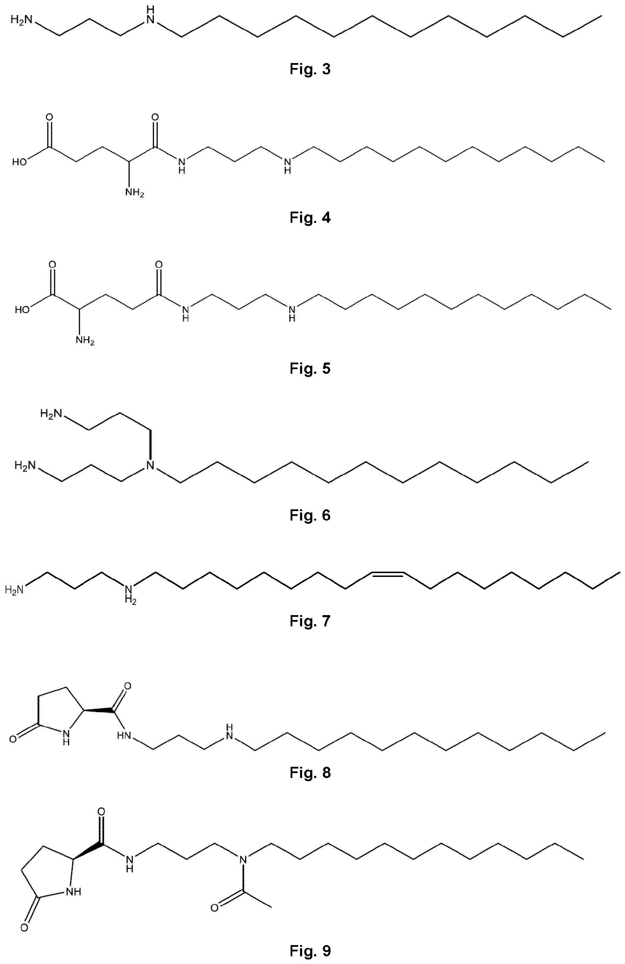

- Figure 3:: *N*-dodecyl-1,3-diamino propane (C12).
- Figure 4:: *N*-(α-glutaminyl amido)-*N*'-n-dodecyl-1,3 diamino propane (αGlu-C12).
- Figure 5:: *N*-(γ-glutaminyl amido)-*N*'-n-dodecyl-1,3-diamino propane (γGlu-C12).
- Figure 6:: *N*'-(3-aminopropyl)-*N*'-n-dodecyl-1,3-diamino propane (Bis-C12).
- Figure 7:: *N*-oleyl-1,3-diamino propane (Oleyl-C12).
- Figure 8:: 5-*N*-carboxamido-2-pyrrolidone-*N*'-n-dodecyl propane-1,3-diamine (Py-C12).
- Figure 9:: 5-*N*-carboxamido-2-pyrrolidone-*N*'-acetamido-*N*'-n-dodecyl propane-1,3-diamine (Py-Acetyl-C12).
- Figure 10:: Coupling of 5-*N*-carboxamido-2-pyrrolidone-*N*'-n-dodecyl propane-1,3-diamine (Py-C12) to NHS-activated carboxy groups on the surface of magnetic beads.
- Figure 11:: Coupling of *N*-dodecyl-1,3-diamino propane (C12) to NHS-activated carboxy groups on the surface of magnetic beads.
- Figure 12:: Coupling of *N*'-(3-aminopropyl)-*N*'-n-dodecyl-1,3-diamino propane (Bis-C12) to NHS-activated carboxy groups on the surface of magnetic beads.
- Figure 13:: Coupling of *N*-(α-glutaminyl amido)-*N*'-n-dodecyl-1,3-diamino propane (αGlu-C12) in different concentrations to NHS-activated carboxy groups on the surface of magnetic beads.
- Figure 14:: Diagram showing the results of a FRET-based endoprotease assay for determining the effect of Py-C12 (2 mM), C12 (500 µM), and Bis-C12 (100 µM) coupled to NHS-activated beads (A) or not coupled (B) on collagenase activity. For comparison also a positive (aminoethanol-coupled beads, Pos.) and negative control were measured.
- Figure 15:: Diagram showing the results of a FRET-based endoprotease-assay for determining the stability of the coupling of Py-C12 (2 mM), C12 (500 µM), and Bis-C12 (100 µM) to NHS-activated beads.. For comparison, a positive control (aminoethanol-coupled beads, Pos.) was measured.
- Figure 16:: Diagram showing the results of a FRET-based endoprotease-assay for determining the effect of αGlu-C12 ( range of 0.03 µmol to 0.59 µmol) on collagenase activity. For comparison, a positive (untreated collagenase, Pos.) and negative control were applied.
- Figure 17:: Diagram showing the results of a FRET-based endoprotease-assay for determining the effect of magnetic beads coupled to Py-Acetyl-C12 (5 mM and 10 mM) on collagenase activity compared to uncoupled Py-Acetyl-C12 (5 mM and 10 mM). For comparison, a positive (aminoethanol-coupled beads, Pos.) and negative control were applied.
- Figure 18:: Coupling methodology for *N*-dodecyl-1,3-diamino propane (C12) to a polysaccharide backbone via Malaprade reaction.
- Figure 19:: Coupling methodology for *N*'-(3-aminopropyl)-*N*'-n-dodecyl-1,3-diamino propane (Bis-C12) to a polysaccharide backbone via Malaprade reaction.
- Figure 20:: Cellulose sheets coupled to C12 (left side), to Bis-C12 (middle) and a control sheet (right side without any coupled 1,3-diamino propane) after intensive washing steps and subsequent inoculation with a beta-galactosidase-expressing *E. coli* strain and incubation at 37 °C for 2 days.
- Figure 21:: Cyanuric chloride (trichlorotriazine).
- Figure 22:: Mono- and Di-(5-*N*-carboxamido-2-pyrrolidone-*N*'-n-dodecyl propane-1,3-diamine (Py-C12))-adducts to cyanuric chloride.
- Figure 23:: MALDI-MS spectrum showing the characteristic peak for Di-(5-*N-*carboxamido-2-pyrrolidone-*N*'-n-dodecyl propane-1,3-diamine (Py-C12)-adduct to trichlorotriazine.
- Figure 24:: Schematic two step coupling of 5-*N*-carboxamido-2-pyrrolidone-*N*'-n-dodecyl propane-1,3-diamine (Py-C12) to cellulose using cyanuric chloride.
- Figure 25:: Schematic two step coupling of *N*-dodecyl-1,3-diamino propane (C12) to cellulose using cyanuric chloride.
- Figure 26:: Schematic two step coupling of *N'*-(3-aminopropyl)-*N*'-n-dodecyl-1,3-diamino propane (Bis-C12) to cellulose using cyanuric chloride.
- Figure 27:: Cellulose sheets coupled to Py-C12 (first from left), C12 (second from left), Bis-C12 (second from right) and a control (cellulose sheet without coupled 1,3-diamino propane, first from right) after intensive washing steps with water and subsequent inoculation with a cellulase solution at 37 °C for 28 days.
- Figure 28:: Cellulose sheets coupled to Py-C12 (first from left), C12 (second from left), Bis-C12 (second from right) and a control (cellulose sheet without coupled 1,3-diamino propane, first from right) after intensive washing steps with water and subsequent inoculation with a beta-galactosidase-expressing *E. coli* strain.

### Detailed Description of the Invention

The invention is based on the finding that diamines, in particular 1 ,3-diamino propanes, can be covalently bound to a substrate via a linker with long-term stability and in particular without losing their biocidal activity.

Particularly, the invention is based on the surprising finding that coupling via an acyclic amino function of the diamine backbone, preferably via a primary or an acyclic secondary amino function of the diamine backbone, enables advantageous long-term stability and biocidal effects. Such acyclic amino functions were considered necessary for exerting the biocidal and protein denaturation functionalities. Prior to the invention, linkage via such amino groups was expected to reduce the biocidal activity or a loss of biocidal activity. Further, a change in the spatial orientation when coupling an acyclic secondary amino group that is no head group was expected to further reduce the biocidal activity. Thus, especially coupling to an acyclic secondary amino group that is no head group was associated with a loss of biocidal efficacy.

The invention relates to a product of formula (I): 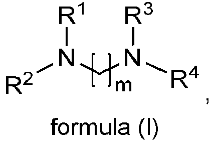 with
m being an integer from 1 to 6, preferably m is 3 and with
R¹ being H, and
R² and R³ each being independently selected from H, a polar protic or polar aprotic substituent independently selected from a saccharide, a polyalcohol, a nucleic acid, an amino acid or an amino acid derivative, a peptide, a protein or a protein derivative, a heterocyclic compound, an organic acid, including a carboxylate, a sulfonate, a phosphate, or a substituent selected from
   CH₃, C₂H₅, 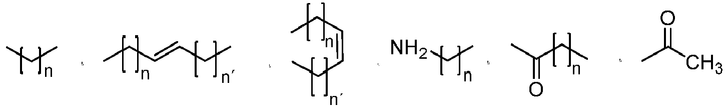 or 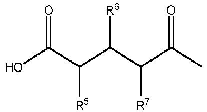 or L-S, with L being a linker and S being a substrate,
with one of R⁵, R⁶ and R⁷ being NH₂ or NH-L-S, and the other being H, and
with n and n' each being independently an integer from 1 to 25,
and with the proviso that either at least R² or R³ is L-S and/or at least one of R⁵, R⁶ and
R⁷ is NH-L-S.

R⁴ is selected from
H, CH₃, C₂H₅, 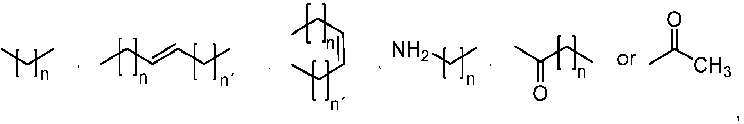 with n and n' each being independently an integer from 1 to 25.

The product of formula (I) can be present in form of a stereoisomer, a racemic mixture, a tautomer, a solvate such as a hydrate or a salt.

According to the present invention, "m" is an integer from 1 to 6. Preferably, "m" is an integer from 2 to 4, more preferably it is an integer of 2 or 3, still more preferably "m" is 3 that is also referred to as "propylenediamines".

Indices "n" and "n"' are each independently selected from an integer from 1 to 25. Preferably, "n" and "n"' are independently selected from an integer from 1 to 15, further preferred from 1 to 12, still further preferred from 3 to 12 and still more preferred from 3 to 11.

The term "protein derivative" as used herein means a natural or non-natural protein, which has been modified, but which is still functionally active despite said modification and/or has an amino acid content of at least 50 % (w/w). Likewise, amino acid derivative means a residue, which can be obtained from a natural amino acid such as by cyclization and/or that is based on a natural amino acid, which carries additional substituents and/or is cyclized.

R² can be an amino acid or an amino acid derivative, wherein any enantiomer of the amino acid or amino acid derivative is encompassed. R² may be a stereoisomer of a natural amino acid or a non-natural amino acid or derivative thereof.

R² may comprise a heterocyclic ring, in particular it can be an amino acid that forms a heterocyclic ring, preferably an oxo-pyrrolidine ring or a pyrrolidine ring. A heterocyclic ring refers to a saturated or unsaturated ring that incorporates one or more heteroatoms, i.e. O, N and/or S.

Preferred amino acids or amino acid derivatives are pyroglutamic acid (5-oxopyrrolidine-2-carboxylic acid) or a derivative thereof or glutamic acid or a derivative thereof.

Preferred pyroglutamic acid or derivatives thereof correspond to general formula (III): 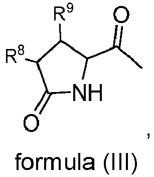
with R⁸ and R⁹ being selected from
   H, XH, 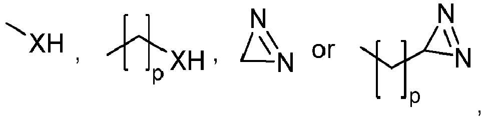
with p being an integer from 0 to 20 and with X being O or S. Preferably, R⁸ and R⁹ are both H.

Preferred glutamic acid or derivatives thereof have a structure of formula (IV) 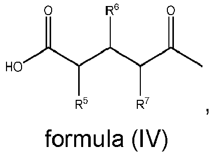 with R⁵ or R⁷ being NH₂ or NH-L-S and the other of R⁵, R⁶ and R⁷ being H.

Preferably, one of R³ and R⁴ is selected from L-S, H, 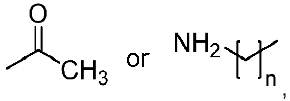 and the other is selected from

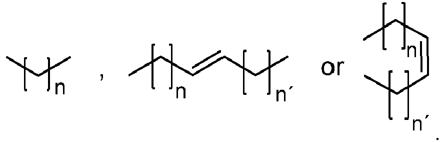

In another preferred embodiment, one of R³ and R⁴ is L-S, H or 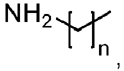 and the other is 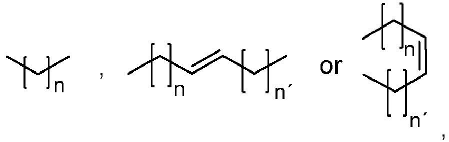 with n and n' being independently selected from an integer from 3 to 12, still more preferred from 3 to 11.

In a preferred embodiment, one of R³ and R⁴ is L-S or H and the other is 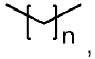 with n being an integer between 4 to 12, preferably 8 to 12, most preferably 11.

Preferably, R² is H, L-S or an amino acid or an amino acid derivative, wherein the amino acid or amino acid derivative is selected from the group consisting of: 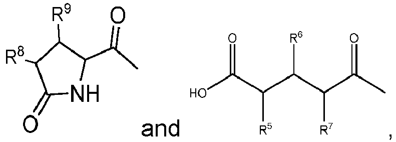 with R⁸ and R⁹ being selected from
H, XH, 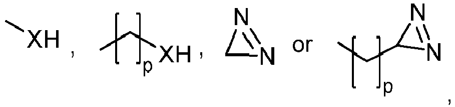 with p being an integer from 0 to 20
and with X being O or S and with one of R⁵, R⁶ and R⁷ being NH₂ or NH-L-S, and the other being H,
with R³ being selected from H, L-S or 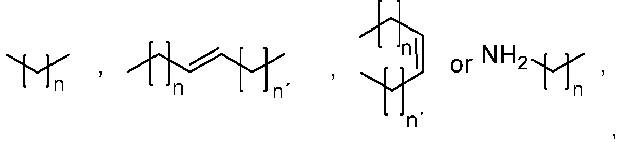 and
with R⁴ being selected from 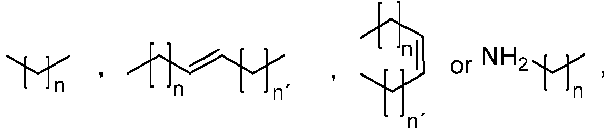
and with the proviso that R² or R³ is L-S or one of R⁵, R⁶ and R⁷ is NH-L-S.

In a more preferred embodiment thereof, R² is 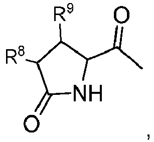
with R⁸ and R⁹ being both H,
and with R³ being L-S and R⁴ being 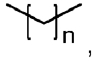 with n being an integer from 8 to 12.

In a further preferred embodiment, R² is 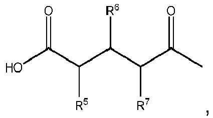
with R⁵ or R⁷ being NH₂ or NH-L-S and the other of R⁵, R⁶, and R⁷ being H, and with R³ being H or L-S and R⁴ being 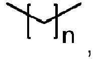 with n being an integer from 8 to 12, with the proviso that either R³ is L-S or R⁵ or R⁷ is NH-L-S.

In another preferred embodiment thereof, R² is L-S with R³ being selected from 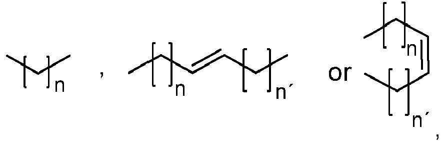 with n and n' being an integer from 2 to 11 and with R⁴ being selected from H or 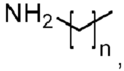 with n being an integer from 2 to 11.

In a further preferred embodiment, R² is L-S, and one of R³ and R⁴ is 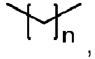 with n being an integer of 11 and the other is H.

In still another preferred embodiment, R² is H, R³ is L-S and R⁴ is 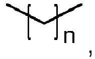 with n being an integer of 11.

In another preferred embodiment, R² is 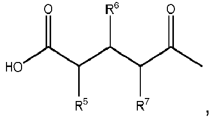 with R⁵ or R⁷ being NH₂ and the other of R⁵, R⁶ and R⁷ being H, R³ is L-S and R⁴ is 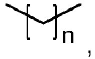 with n being an integer of 11.

In a further preferred embodiment, R² is 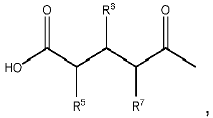 with R⁵ or R⁷ being NH-L-S and the other of R⁵, R⁶ and R⁷ being H, one of R³ and R⁴ being 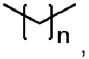 with n being an integer of 11 and the other being H.

In another preferred embodiment, R² is L-S, one of R³ and R⁴ is 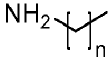 and the other is 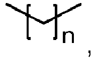 with n being an integer of 7 to 11, preferably an integer of 7 or 11.

In another preferred embodiment, R² is L-S, one of R³ and R⁴ is 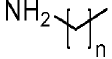 and the other is 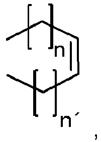 with n being an integer of 8 and n' being an integer of 7.

In a particular preferred embodiment, R² is 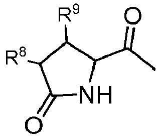 with R⁸ and R⁹ being H, R³ is L-S and R⁴ is 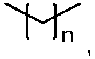 with n being an integer of 1 to 25, preferably of 11.

The product of formula (I) comprises a diamine backbone. This term as used herein refers to the component of the product that is defined by the above formula (II) excluding the L-S substituent. To generate the product, one substituent within the structure of the compound of formula (II) is replaced by L-S, specifically a hydrogen atom of an amino group. The diamine backbone is preferably a 1,3-diamino propane backbone, i.e. m is preferably 3.

The diamine backbone is covalently bound to a substrate via a linker. This is reflected in the above formula (I) by the fact that either at least one of R² and R³ is L-S and/or at least one of R⁵, R⁶ and R⁷ is NH-L-S. Likewise, the above formula (I) defines that this covalent bond is via a primary and/or an acyclic secondary amine of the diamine backbone. The linker preferably increases the distance between the diamine backbone and the substrate and may also be used to adjust the spatial orientation and structural arrangement, respectively, of the diamine backbone.

The term "product" encompasses any form like an article, a conjugate, a compound and so on without any limitation regarding its size or dimensions.

According to the present invention, there is a linker between diamine backbone and substrate. It is especially preferred that the linker retains the functionality of the diamine and optionally induces a certain type of structural arrangement.

A linker is derived from a chemical molecule comprising at least one functional group or it is derived from a functional unit that can link a substrate (e.g. a macromolecular structure, or a surface) and an active or functional substance based on chemical reactions (e.g. addition to epoxides and active esters). Linking or linkage as used herein, means covalently connecting atoms or atom groups. Linker as used herein, encompasses a molecule with specific features, like a tether to a functional group enabling covalent coupling, single atoms or even covalent bonds, preferably two-centre two-electron bond types.

The linker according to the present invention can be derived from a functional group or it can be derived from a molecule comprising at least one functional group that is or is not already attached to or forms part of the substrate. The term linker thus encompasses embodiments in which the functional group or molecule is naturally present on the substrate and likewise in which it is generated by chemical or physical modifications on the substrate. In an embodiment, linkers are derived from functional groups that are attached to a substrate (e.g. through chemical modification of the surface) and that can be reacted with at least one primary or acyclic secondary amino group of the diamine. In other embodiments of the present invention, the linker is derived from a function group forming part of the substrate, in particular being naturally present on the substrate, whose functional group can be reacted with at least one primary or acyclic secondary amino group of the diamine.

According to the present invention, a linker is the residue obtainable by reacting a linking agent optionally coupled to a substrate with a primary or acyclic secondary amino group of the diamine backbone. An intermediate product is a linking agent coupled to a substrate, which still comprises a functional group allowing bond formation with a primary or acyclic secondary amino group of the diamine. An alternative intermediate product is a linking agent coupled to a primary or acyclic secondary amino group of the diamine backbone, which still comprises a functional group allowing bond formation with the substrate.

Commercially available linking agents, substrates and intermediate products of linking agents coupled to a substrate can be applied, according to the present invention.

According to an embodiment, the linkage to at least one primary or acyclic secondary amino group of the diamine and/or to the substrate is via a functional group derived from isothiocyanate (S=C=N-), isocyanate (O=C=N-), active ester (e.g. *N*-hydroxysuccinimide-active ester, perfluorophenyl active ester), halide (e.g. F⁻, Cl⁻, Br⁻, I⁻), nitrile (CN⁻), aryl sulfonyl halide, alkyl sulfonyl halide, aldehyde, ketone, dialdehyde, epoxide, di- and polydentate epoxy ether (e.g. crosslinkers and hardeners of the state of the art), halogenated N-heterocycle, aryl halide (such as aryl chloride), alkyl halide (such as alkyl chloride), carboxylic acid ester, imidoester, carbodiimide, double or triple bond, hydroxyl, peroxide, carboxylate, carbonate, amine, anhydride, ester, ether, thiol or sulfonate.

Generally, linkers can be divided into permanent and labile linkers; the latter can be cleaved again by a specific reaction, liberating the covalently bound structures.

According to the invention, any combinations of linkers, diamines, and substrates are possible. Fig. 1 shows exemplary covalent solid phase couplings of different linking agents, wherein the squares represent the substrate.

In a preferred embodiment, the linking agent is a N-hydroxysuccinimide (NHS)-activated ester. Preferably, the NHS-activated ester is coupled to the substrate, in particular comprising a polymer, more preferably forming NHS-activated magnetic beads as intermediates, namely as linking agents coupled to substrate.

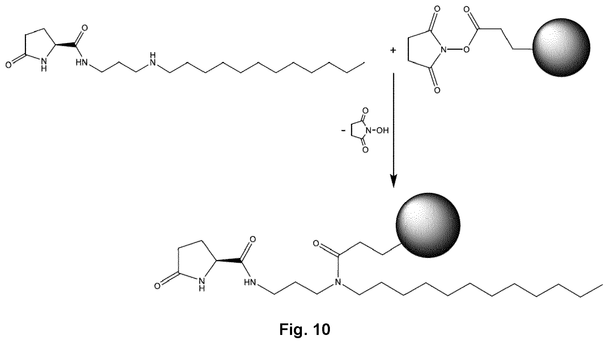

Exemplary couplings with NHS-activated ester as a linking agent are shown in Fig. 10, 11, 12 and 13.

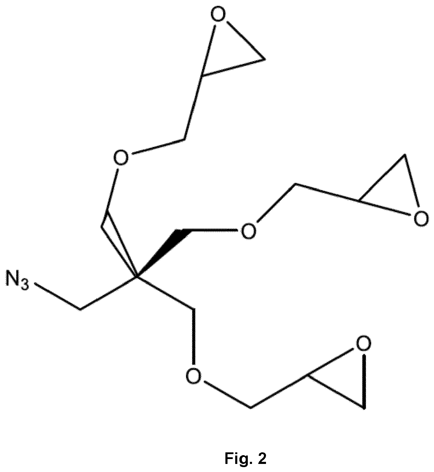

In addition, the molar rate of covalently bound molecules, such as the diamines, is an important technical parameter, often called "degree of loading". In some cases, it may be desirable to increase the number of binding partners like diamines or substrate, in particular of diamines per an anchoring unit. In those embodiments, a special form of linking agent is used that has several anchoring units, thus multiplying or even diversifying the possible degree of loading. Thus, multifunctionalized linking agents and linkers, respectively, like dendrimer type linking agents and linkers, respectively, are preferably applied further, increasing the biocidal activity. In other words, in a preferred embodiment, the linker comprises a dendrimeric structure, i.e. a dendrimer, or carries more than one functional group for bond formation with the diamine backbone and compound of formula (II), respectively. In other words, the linking agent preferably comprises several repeating units and/or carries more than one functional group so that one linking agent can be coupled to more than one compound of formula (II). An exemplary unit for forming dendrimer type linking agents, which is derived from pentaerythritol, is shown in Fig. 2.

In a further embodiment, the linking agent is 1,1,1-tris-(hydroxymethyl)-propane triglycidyl ether (TMPTGE).

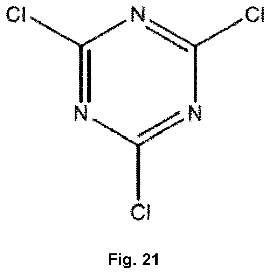

In an alternative embodiment, the linking agent is cyanuric chloride (trichlorotriazine). Cyanuric chloride is shown in Fig. 21. Cyanuric chloride is a trident linking agent capable of cross-linking substrates, e.g. polysaccharide fibres, cellulose fibres, polyols. It can be used for forming dendrimer type linking agents.

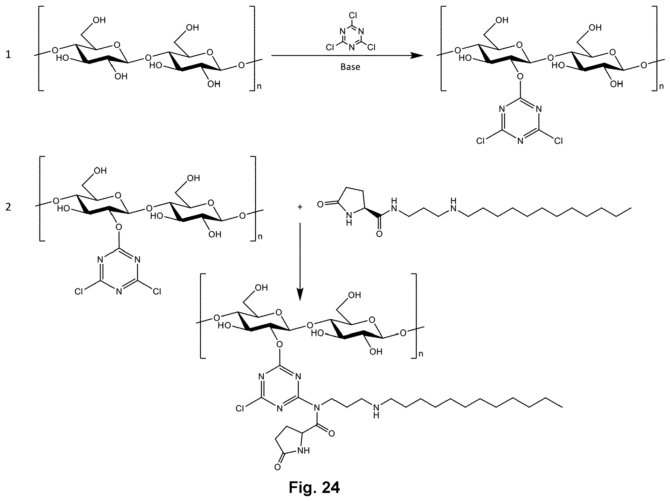

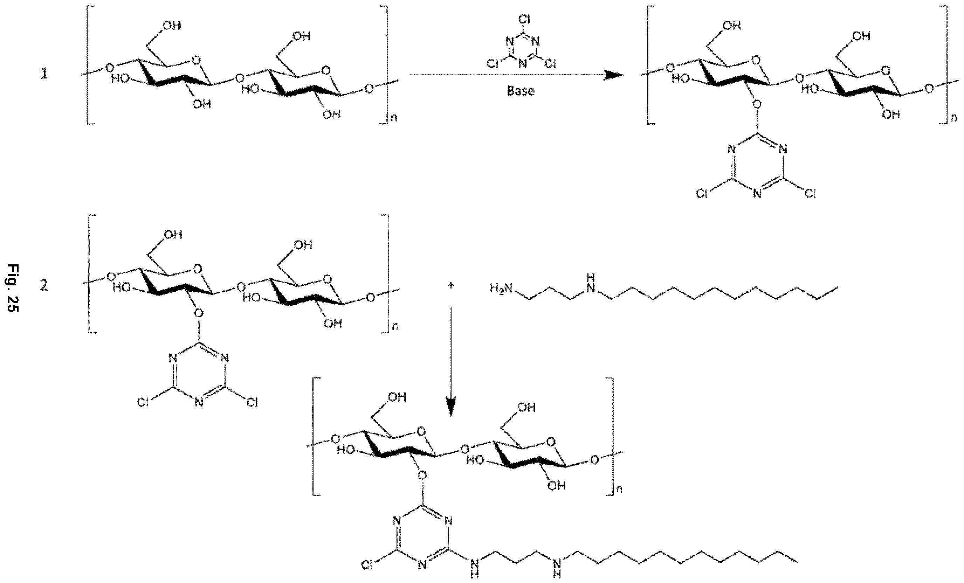

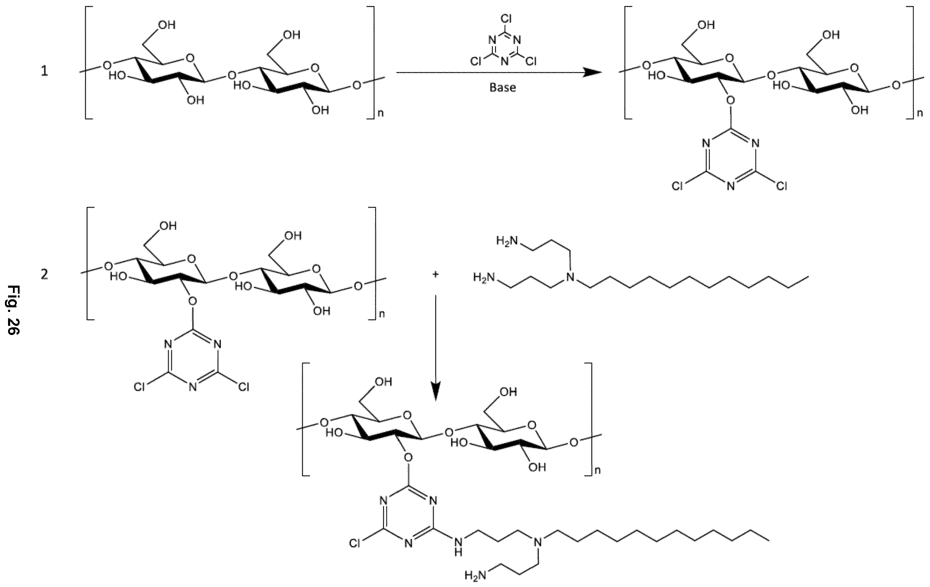

Exemplary couplings with cyanuric chloride as linking agent are shown in Fig. 24, 25 and 26.

Cyanuric chloride is a well-known and widely applied linking agent for polysaccharides, e.g. for cellulose.

At least one of R² and R³ is L-S and/or at least one of R⁵, R⁶ and R⁷ is NH-L-S as defined above. Preferably, one of R² and R³ is L-S or one of R⁵ and R⁷ is NH-L-S. L-S can be derived from NHS-activated magnetic beads as linking agent coupled to a substrate.

A substrate may be any macromolecular structure, or surface. Preferably, the substrate comprises reactive chemical groups that allow the coupling of the linking agent to the substrate or the surface of the substrate has been treated such as activated, e.g. by plasma activation (or plasma functionalization), by generating free radicals and/or by anchoring functional groups, such as ligands, whose functional groups include, for example, hydroxyl, carbonyl, peroxyl, carboxyl, amino or amines forming the linking agent for linkage to the diamine backbone.

The term "substrate" encompasses any material including absorbents, adsorbents, hygroscopic and porous materials, such as fabrics (textiles), e.g. cotton, wool, hemp, silk, polyester, polyamide; building materials, e.g. straw, glass wool, rock wool, silicone, gypsum, lime, cement, concrete, bricks, porous and absorbent stones, clay; glues and gels, biological and synthetic sponges for cleaning and medical applications, porous and sintered metals, porous and absorbent ceramics, biological tissues, natural and processed biomaterials, e.g. extracellular matrix molecules, scaffolds, bone, wood, leather, paper, cardboard, resins, plastics and composite materials. The term also includes polymers, such as, e.g. polyamides, polyurethane, polypeptides, polyols or polyesters. The polyols include polysaccharides, in particular cellulose and chitosan. In an embodiment, the substrate is selected from a synthetic sponge, a fabric, leather, bone tissue or wood. In another embodiment, the substrate is a fabric and the fabric comprises cellulose, silk or a polyester, more preferably the fabric is cotton, i.e. the fabric comprises cellulose and may additionally comprise waxes, fats, pectins and/or water. The substrate is in an embodiment selected from metal, glass, ceramic, polymer, textile and/or natural substance such as wood. The substrate can comprise a polysaccharide, such as cellulose. The substrate may also be a powdered polysaccharide, such as chitosan and carboxymethylcellulose. The substrate can also be a saccharide, a polyalcohol, a nucleic acid, an amino acid or an amino acid derivative, a peptide, a protein or a protein derivative, a heterocyclic compound, an organic acid, including a carboxylate, sulfonate, and phosphate. The substrate can also comprise a polymer forming magnetic particles or magnetic beads, in particular magnetic beads comprising carboxy groups. Said functionalized magnetic beads can be activated with NHS, thus forming NHS-activated magnetic beads as linking agent coupled to the substrate.

A further group of substrates are polyalcohols. Due to their wide range of applications and the numerous possible chemical derivatizations, which allow the coupling to amines, polyalcohols are an important group of substrates. Polyalcohols may also comprise different ligands (i.e. oligoligand polysaccharides) that may act as linkers and linking agents, respectively.

A substrate can also be a specially treated surface that allows the coupling of diamines to the substrate. Surface activation and modification for the covalent binding of diamines to many substrates and materials such as metals, glass, ceramics, polymers, textiles and natural materials may be carried out by plasma treatment. For example, the surface can be activated by generating free radicals and by anchoring functional groups, such as hydroxyl, carbonyl, peroxyl, carboxyl, or amines.

In a related aspect, the present invention provides a method for preparing a product of formula (I) as defined above, comprising the steps of:
(a) reacting a compound of formula (II) 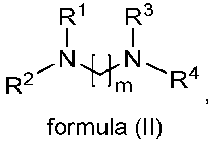 with
   m being an integer from 1 to 6, preferably m being 3, and
   R¹ being H, and
   R² and R³ being independently selected from H, a polar protic or polar aprotic substituent independently selected from a saccharide, a polyalcohol, a nucleic acid, an amino acid or an amino acid derivative, a peptide, a protein or a protein derivative, a heterocyclic compound, an organic acid, including a carboxylate, sulfonate and phosphate, or a substituent selected from
   CH₃, C₂H₅, 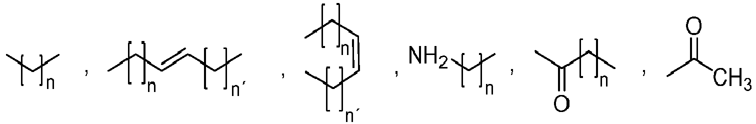 or 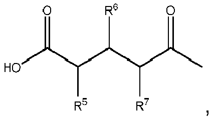 with one of R⁵, R⁶ and R⁷ being NH₂, and the other being H, and
   with n and n' being an integer from 1 to 25 and with
   R⁴ being selected from
   H, CH₃, C₂H₅, 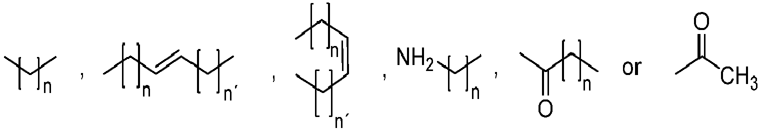
   , with n and n' being an integer from 1 to 25,
   with a linking agent and optionally with a reducing agent and
(b) optionally reacting the product of step (a) with a substrate.

The compound of formula (II) can be a stereoisomer, a racemic mixture, a solvate, such as a hydrate or a salt.

In an embodiment, the compound of formula (II) is selected from the group consisting of *N*'-(3-aminopropyl)-*N*'-n-dodecyl-1,3-diamino propane (Bis-C12), *N*-oleyl-1,3-diamino propane (Oleyl-C12), *N*-dodecyl-1,3-diamino propane (C12), 5-*N*-carboxamido-2-pyrrolidone-N'-n-dodecyl propane-1,3-diamine (Py-C12), *N*-(α-glutaminyl amido)-*N*'-n-dodecyl propane-1,3-diamine (αGlu-C12) and *N*-(γ-glutaminyl amido)-*N*'-n-dodecyl propane-1,3-diamine (γGlu-C12) or mixtures thereof.

Especially preferred is that the compound of formula (II) is selected from the group consisting of Py-C12, C12, Bis-C12, αGlu-C12 and γGlu-C12, still more preferred from Py-C12, C12, and Bis-C12.

In a particularly preferred embodiment, the compound of formula (II) is Py-C12, referred to as 5-*N*-carboxamido-2-pyrrolidone-*N*'-n-dodecyl propane-1,3-diamine.

In one embodiment, the compound of formula (II) is reacted with a linking agent optionally bound to a substrate or naturally present on the substrate, and optionally a reducing agent. Preferably, in said embodiment, the linking agent reacts at least with a primary or an acyclic secondary amino group of the diamine of formula (II).

In other embodiments, compounds of formula (II) are reacted with a linking agent bound to a substrate or naturally present on the substrate. The linking agent can be bound to the substrate forming NHS-activated magnetic beads. Preferably, said NHS-activated magnetic beads react with at least one primary or acyclic secondary amino group of the diamine of formula (II).

In a further embodiment, compounds of formula (II) are reacted with a linking agent and reacted with a substrate and optionally reacted with a reducing agent. "Reacting" in general means mixing the components, in particular in the presence of a reaction medium, in particular it means incubating the components in a reaction medium at a certain temperature and for a certain time.

A reaction in which the compound of formula (II), the linking agent, the substrate and optionally the reducing agent are reacted may be any form of carbonyl-amine condensation, preferably a Malaprade reaction. In the Malaprade reaction, compounds containing two hydroxyl groups, or a hydroxyl and an amino group, attached to adjacent carbon atoms, undergo cleavage of the carbon-carbon bond when treated with periodic acid to yield aldehyde groups. Subsequently, the compound of formula (II) is reacted under condensation with an aldehyde group and optionally the condensation product is reduced with a reducing agent.

The method using the Malaprade reaction is especially suitable for 1,4- and 1,6-linked polysaccharides as substrates.

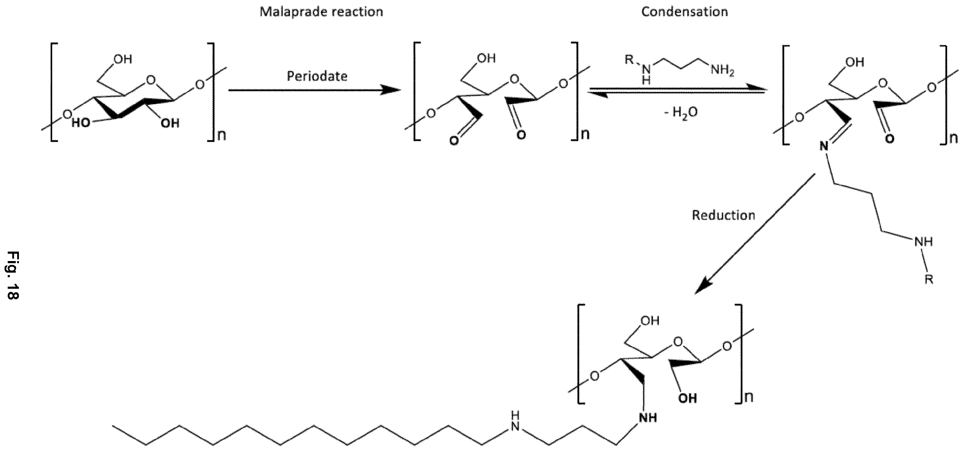

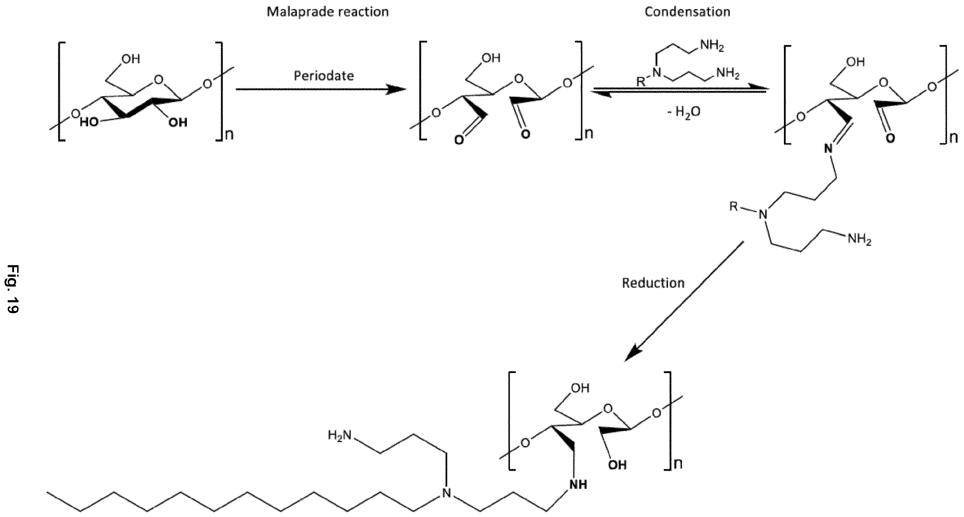

Exemplary Malaprade reactions are depicted in Fig. 18 and 19. In said Malaprade reactions a polysaccharide is cleaved with periodate, reacted with the diamine of formula (II) and subsequently reduced with a reducing agent.

The reducing agent is selected from the group of hydrogen or hydride evolving compounds, preferably boron species, preferably borohydrides and borane amines, preferably sodium cyanoborohydride or mixtures thereof.

The ratio of substrate : linking agent : compound of formula (II) is preferably between 1:2:2 and 1:1.5:1.5. Preferably, the ratio of substrate : linking agent : compound of formula (II) is selected according to desired product specifications, as are the degree of loading, solubility, layer thickness etc. and depends on the chemical features of the substrate to be coated. Ratios applied herein vary between 1:2:2 and 1:1.5:1.5.

The method for preparing the product of formula (I) is preferably carried out in a basic reaction medium. The pH of the reaction medium is preferably within the range of 7.5 to 13, more preferably within the range of 8 to 10, most preferably within the range of 8.5 to 9.5, further preferred the pH is about 8.5.

In an embodiment of the method of the present invention, the 1,3-diamino propane is incubated with the linking agent coupled to a substrate, such as with NHS-activated magnetic beads, for 30 minutes to 10 h, preferably for 1 to 3 hours, more preferably for about 2 hours at a temperature of 10 °C to 30 °C, preferably at about 20 °C to 25 °C, preferably at room temperature.

Afterwards at least one washing step is performed, e.g. with water optionally with borate, and optionally at least one quenching step with a quenching solvent, e.g. aminoethanol.

In embodiments, in which the substrate is cellulose, it is preferred that cellulose substrate is treated with the linking agent, in particular cyanuric chloride, followed by incubation with the diamine for at most 1 hour, in particular for 10 minutes to 40 minutes, more preferably for about 30 minutes at a temperature of 10 °C to 30 °C, preferably at about 20 °C to 25 °C, preferably at room temperature, preferably followed by at least one washing step. After a preferred drying step, samples are incubated with the compound of formula (II) for at least 30 minutes to 40 hours, preferably for 10 hours to 30 hours, more preferred for about 20 hours preferably at a temperature of 20 °C to 70 °C, more preferred 40 °C to 60 °C and most preferred at about 50 °C.

The method of the present invention leads to a covalent binding of the primary or acyclic secondary amino group of the compound of formula (II) to the substrate via the linker. The covalent binding preferably does not lead to a change of the spatial orientation of the compound of formula (II) and avoids leaching from the substrate.

Preferably, the product of formula (I) provides long term stability which is intended to mean a reduced risk of leaching and rinse-off of the diamine backbone and biocide, respectively, and prevents enzymatic degradation of the product of formula (I). Preferred is less than about 20 %, preferably less than about 10 %, leaching and rinse-off and/or enzymatic degradation of the product of formula (I) after about 2 weeks, preferably after about 3 weeks and more preferably after about 4 weeks.

Preferably, the covalent binding of at least one primary or acyclic secondary amino group of the diamine backbone, especially of an acyclic secondary amino group, does not interfere with the biocidal activity of the compound of formula (II). More preferably, the biocidal activity is maintained or even increased by covalently binding the compound of formula (II) to the substrate compared with the compound of formula (II), which is not coupled to a substrate. "Biocidal activity", as used herein, in particular means that the compounds interfere with the function and/or the structure of at least one polypeptide, in particular a protein. I.e. the present invention specifically refers to the ability of the diamine backbone of the product of formula (I) to still interfere with the function and/or the structure of at least one polypeptide as a specific form of biocidal activity.

As used herein, "interfering with the function and/or the structure of a polypeptide" means a targeted change in function and/or structure of a polypeptide. This change includes an increase, i.e. a positive change, or a decrease, i.e. a negative change. Preferably, the change in function and/or structure of a polypeptide is a decrease, i.e. a negative change of its function and/or structure. Preferably, it is a decrease of the function of a polypeptide, i.e. a decrease of the enzyme activity, in particular a denaturation of the polypeptide. In particular, the polypeptide is an enzyme and the decrease of its function is an inhibition of enzyme activity.

The function of a polypeptide is linked to its three-dimensional form, which includes secondary, tertiary, and, where applicable, quaternary structures. Interfering with its structure may also be referred to as denaturation, i.e. a process in which the polypeptide loses, at least in part, its three-dimensional form.

Due to the function-structure relationship of polypeptides, such denaturation often leads, at least partially, to a decrease and preferably a loss of the polypeptide's function.

In case the polypeptide is an enzyme, the relevant function might be referred to as an "activity", and loss thereof might be referred to as "inhibiting" or "inactivating".

According to the invention the polypeptide is not a prion.

In a preferred embodiment, the product of formula (I) is used for inhibiting an enzyme, i.e. for inhibiting enzyme activity, in particular by polypeptide-denaturation. This "use of the product of formula (I) for inhibiting an enzyme, i.e. for inhibiting enzyme activity" is based on the biocidal activity of the diamine backbone, more specifically its ability to interfere with the function and/or the structure of a polypeptide.

In a particular embodiment, the decrease or inhibition of enzyme activity refers to a decrease in activity of the enzyme of at least about 30 %, more preferably of at least about 50 %, preferably of at least about 70 %, more preferably of at least about 80 %, and most preferably of at least about 90 %.

Preferably, compared with the uncoupled compound of formula (II), the inhibition of enzyme activity, in particular of protease activity by polypeptide-denaturation, of the diamine backbone of the product of formula (I) is at least maintained. This is intended to mean that the inhibition of enzyme activity, namely the decrease in activity of the enzyme exerted by the product of formula (I), more specifically by the diamine backbone and coupled compound of formula (II), respectively, is at least 80 % of the enzyme inhibition determined with the same amount in relation to the compound of formula (II) in uncoupled form and under the same test conditions. More preferably, the inhibition of enzyme activity, in particular of protease activity, is at least 90 %, further preferred at least 100 % of the enzyme inhibition exerted by compound (II) in uncoupled form, still further preferred at least 110 %.

Such enzyme activities include those of oxidoreductases, such as dehydrogenases, peroxidases, dioxygenases; transferases, such as methyltransferase, kinases, aminotransferases polymerases; hydrolases, such as esterases, glycosylases, peptidases/proteinases; lyases such as dehydratases; isomerases, such as racemases, cis-trans isomerases, intramolecular oxidoreductases, intramolecular transferases; or ligases.

In an embodiment, the enzyme is selected from an oxidoreductase, a transferase, a hydrolase or an isomerase.

In a preferred embodiment, the enzyme is selected from an oxidoreductase, preferably from a dioxygenase and/or a peroxidase, more preferably from cyclooxygenase and/or a myeloperoxidase.

In yet another preferred embodiment, the enzyme is selected from a hydrolase, preferably from an esterase, lipase, peptidase/proteinase and/or glycoside hydrolase, more preferably from a nuclease, a phospholipase, a serinprotease, a cellulase, a laminarinase and/or a xylanase, further preferably from a ribonuclease (RNAse), a deoxyribonuclease (DNAse), thrombin, an elastase and/or a collagenase.

Further, it has been found that the effects of the product of formula (I) on the function and/or structure of a polypeptide can be adjusted based on the dose of the diamine backbone, respectively, which allows their adjustment depending on specific application purposes.

The suitability of the product of formula (I), namely of the diamine backbone, to inhibit enzymatic activities was unexpected, since a loss of this activity was to be expected when covalently binding amine functionalities, which were expected to be responsible for or to contribute to its biocidal activity, especially when binding secondary amino groups located within the structure of the diamine backbone and compound of formula (II), respectively, to a substrate.

In a further aspect, the present invention is directed to the product of formula (I) prepared by a method as described above.

Furthermore, the invention also relates to the use of a compound of formula (II) as described above for preparing a product of formula (I) as described above.

Also provided is the use of the product of formula (I) as described above for interfering with the function and/or the structure of a polypeptide, in particular an enzyme, further preferred a oxidoreductase, a transferase, a hydrolase or a isomerase and wherein the polypeptide is not a prion. In particular, the invention relates to the use of the product of formula (I) as described above for inhibiting an enzyme, i.e. for inhibiting enzyme activity, in particular by polypeptide denaturation. Preferred is the use of the product of formula (I) for denaturation of a polypeptide, in particular of a protein, more specifically of an enzyme. Preferably, the enzyme is selected from an oxidoreductase, more preferably from a dioxygenase and/or a peroxidase, further preferably from cyclooxygenase and/or a myeloperoxidase. Also preferred the enzyme is selected from a hydrolase, more preferably from an esterase, lipase, peptidase/proteinase and/or glycoside hydrolase, further preferably from a nuclease, a phospholipase, a serinprotease, a cellulase, a laminarinase and/or a xylanase, still further preferably from a ribonuclease (RNAse),a deoxyribonuclease (DNAse), thrombin, an elastase and/or a collagenase.

The invention will be further described in the following examples, which are not to be construed as limiting the invention.

### Examples

### Example 1: Coupling of 5-N-carboxamido-2-pyrrolidone-N'-n-dodecyl propane-1,3-diamine (Py-C12), N-dodecyl-1,3-diamino propane (C12), N'-(3-aminopropyl)-N'-n-dodecyl-1,3-diamino propane (Bis-C12) and N-(α-glutaminyl amido)-N'-n-dodecyl-1,3 diamino propane (αGlu-C12) to NHS-activated carboxy groups on the surface of magnetic beads

Coupling method: The 5-*N*-carboxamido-2-pyrrolidone-*N*'-n-dodecyl propane-1,3-diamine (Py-C12), *N*-dodecyl-1,3-diamino propane (C12), *N*'-(3-aminopropyl)-*N*'-n-dodecyl-1,3-diamino propane (Bis-C12) and *N*-(α-glutaminyl amido)-*N*'-n-dodecyl-1,3-diamino propane (αGlu-C12) was coupled to N-hydroxysuccinimide (NHS)-activated magnetic beads according to the information of the manufacturer (Pierce^{™} NHS-Activated Magnetic Beads; ThermoFisher Scientific). Therefore, 2 mM Py-C12, 500 µM C12, 100 µM Bis-C12, 0.27 µM αGlu-C12 and 1 M aminoethanol in 50 mM borate buffer (pH 8.5) and 50 µl of NHS-activated magnetic beads were incubated for 2 hours at room temperature on a rotator. The magnetic beads coupled to aminoethanol serve as positive control. During the first 30 minutes of incubation, the tubes were vortexed for 15 seconds every 5 minutes. For the remaining time, the tubes were vortexed for 15 seconds every 15 minutes. Afterwards, the beads were collected into a magnetic stand and washed with ultrapure water before they were quenched with 3 M aminoethanol (pH 9.0) for 2 hours at room temperature on a rotator. The beads were collected on a magnetic stand and washed with ultrapure water and 50 mM borate buffer (pH 9.0).

Fig. 10 shows the coupling experiment of Py-C12 to NHS-activated carboxy groups on the surface of magnetic beads as an intermediate product of a linking agent coupled to a substrate. The grey-shaded circles represent the magnetic beads.

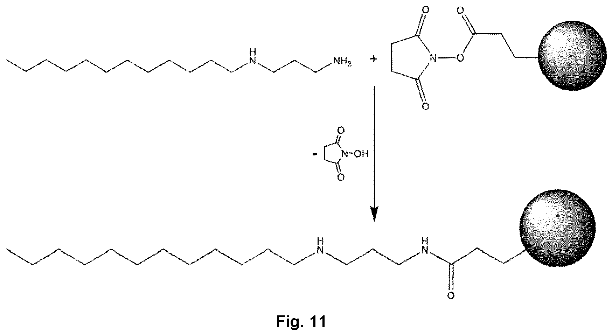

Herein it could be shown that the compound reacts with NHS-active esters to the corresponding disubstituted amid. Accordingly, the primary amino groups of the C12, Bis-C12 and αGlu-C12 could be converted in a similar manner (Fig. 11, 12 and 13).

Fig. 11 shows the coupling experiment of C12 to NHS-activated carboxy groups on the surface of magnetic beads as an intermediate product of a linking agent coupled to a substrate. The grey-shaded circles represent the magnetic beads.

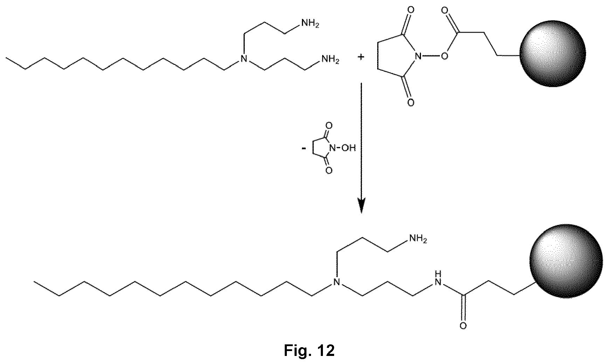

Fig. 12 shows the coupling experiment of Bis-C12 to NHS-activated carboxy groups on the surface of magnetic beads as an intermediate product of a linking agent coupled to a substrate. The grey-shaded circles represent the magnetic beads.

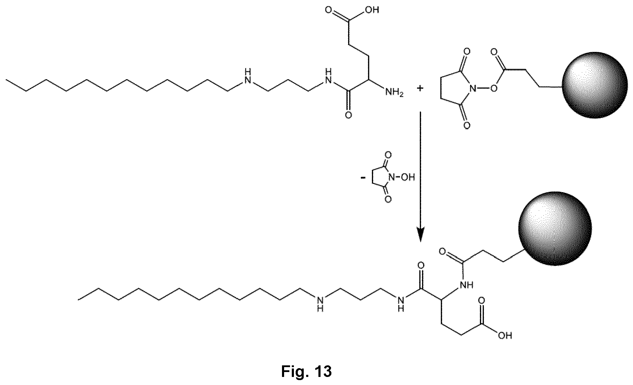

Fig. 13 shows the coupling of αGlu-C12 to NHS-activated carboxy groups on the surface of magnetic beads as an intermediate of a linking agent coupled to a substrate. The grey-shaded circles represent the magnetic beads.

### Example 2: Testing of the functional protein denaturing effect of coupled 5-N-carboxamido-2-pyrrolidone-N'-n-dodecyl propane-1,3-diamine (Py-C12), N-dodecyl-1,3-diamino propane (C12) and N'-(3-aminopropyl)-N'-n-dodecyl-1,3-diamino propane (Bis-C12) in comparison to 5-N-carboxamido-2-pyrrolidone-N'-n-dodecyl propane-1,3-diamine (Py-C12), N-dodecyl-1,3-diamino propane (C12) and N'-(3-aminopropyl)-N'-n-dodecyl-1,3-diamino propane (Bis-C12) not coupled

A) For the testing of the inactivation of collagenase by coupled Py-C12, C12 and Bis-C12, a commercial template containing 2.5 million peptides was used (P-Check substrate, PANATecs, Germany). In the test process, 0.44 mg/ml collagenase (Sigma-Aldrich, Merck, Germany) was treated with the Py-C12-, C12-, Bis-C12- and aminoethanol-coupled magnetic beads made according to the procedure described in Example 1 (Fig. 10, 11 and 12) in 50 mM MOPS buffer supplemented with 2 mM CaCl₂ (pH 7.0) and incubated for 15 minutes at 37 °C. The beads were separated from the collagenase on a magnetic stand and washed with 100 µl MOPS buffer (pH 7.0). The supernatant containing the collagenase was transferred to a 96 well plate and mixed with 10 µl of P-Check substrate. Collagenase activity was determined by the detection of the change of fluorescence intensity (RFU) in a kinetic mode every 60 seconds for at least 30 minutes on a Cytation 5 Multi-Mode-Reader (BioTek, Germany).
B) For the testing of the inactivation of collagenase by Py-C12, C12 and Bis-C12 not coupled, the commercial substrate mentioned under A) was used. In the test process, 0.44 mg/ml collagenase (Sigma-Aldrich, Merck) was treated with 2.83 mM Py-C12, or 2 mM C12, or with 3.33 mM Bis-C12 in 50 mM MOPS buffer supplemented with 2 mM CaCl₂ (pH 7.0) and incubated for 15 minutes at 37 °C. To separate the Py-C12, C12 or Bis-C12 from the collagenase, the preparation was washed three times with 50 mM MOPS/2 mM CaCl₂ (pH 7.0; wash buffer) by centrifugation (400 x g) for 30 minutes on an Amicon^{®} Ultra-4* Centrifugal Filter Unit (10.000 NMWL; Merck Millipore, Germany).

Following the final washing step, 400 ml wash buffer was added to the Py-C12-, C12- or Bis-C12-free collagenase concentrate on the filter membrane. 90 µl of the concentrated both treated and untreated collagenase was taken up with the aid of a pipette, transferred to a new vessel and mixed with 10 µl of P-Check substrate. Collagenase activity was determined by the detection of the change of fluorescence intensity (RFU) in a kinetic mode every 60 seconds for at least 30 minutes on a Cytation 5 Multi-Mode-Reader (BioTek).

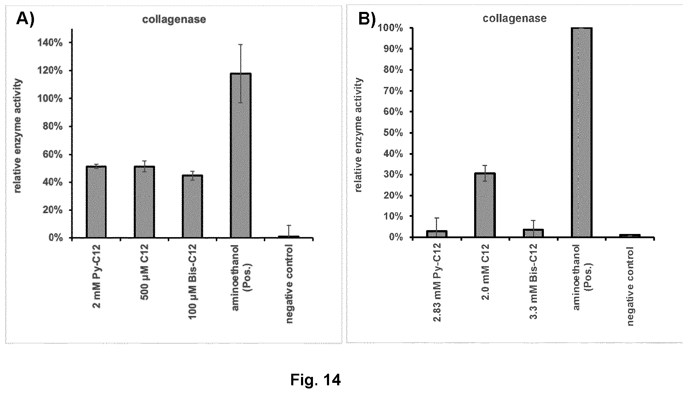

The treatment of collagenase with 2 mM Py-C12, 500 µM C12 and 100 µM Bis-C12 coupled to NHS-activated carboxy groups on the surface of magnetic beads results in an about 80 % reduction of collagenase activity in comparison to the aminoethanol-coupled beads (positive control) treated collagenase (Fig. 14 A). As can be seen from the results depicted in Fig. 14 B, 2.83 mM Py-C12, 2 mM C12 and 3.3 mM Bis-C12 lead to an at least 80 % reduction of the collagenase activity.

### Example 3: Testing of the functional stability of coupling of 5-N-carboxamido-2-pyrrolidone-N'-n-dodecyl propane-1,3-diamine (Py-C12), N-dodecyl-1,3-diamino propane (C12) and N'-(3-aminopropyl)-N'-n-dodecyl-1,3-diamino propane (Bis-C12)

To investigate the functional stability of the coupled diamines, the collagenase inactivation ability of Py-C12, C12 and Bis-C12-coupled beads was examined over a period of three weeks with intermediate storage of the diamine-beads.

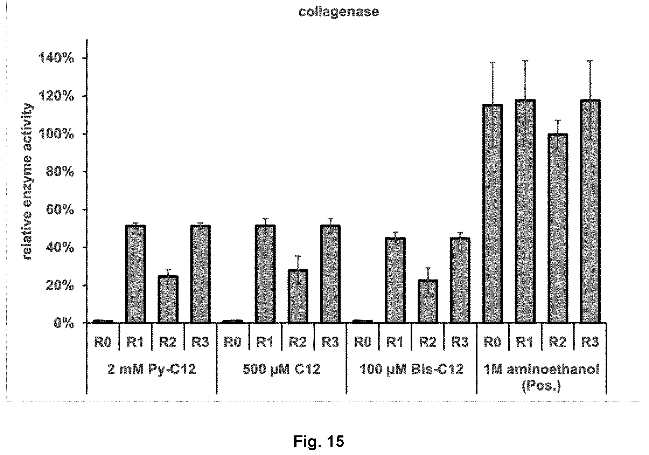

In the test process, 0.44 mg/ml collagenase (Sigma-Aldrich, Merck) was treated with the Py-C12-, C12-, Bis-C12- and aminoethanol-coupled magnetic beads made according to the procedure of Example 1. Collagenase was transferred to a 96 well plate and mixed with 10 µl of P-Check substrate. Collagenase activity was determined by the detection of the change of fluorescence intensity (RFU) in a kinetic mode every 60 seconds for at least 30 minutes on a Cytation 5 Multi-Mode-Reader (BioTek). After this, the beads were stored for three weeks at 4 °C and the experiment with these diamine-beads was repeated once a week (indicated in Fig. 15 as R0 to R3).

The treatment of collagenase with 2 mM Py-C12, 500 µM C12 and 100 µM Bis-C12 coupled to NHS-activated carboxy groups on the surface of magnetic beads results in about 50 % reduction of collagenase activity in each repetition in comparison to the aminoethanol-coupled beads (positive control) treated collagenase (Fig. 15).

### Example 4: Testing of the functional protein denaturing effect of coupled N-(α-glutaminyl amido)-N'-n-dodecyl propane-1,3-diamine (αGlu-C12)

For the testing of the inactivation of collagenase, a commercial template containing 2.5 million peptides was used (P-Check substrate).

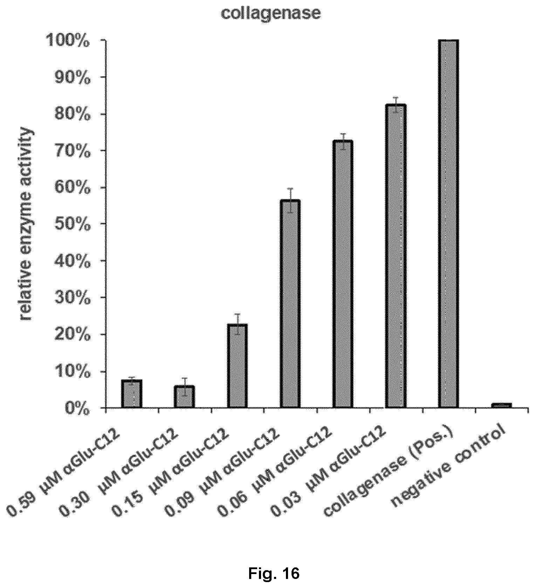

During further testing, 0.44 mg/ml collagenase (Sigma-Aldrich, Merck) was treated with the αGlu-12-magentic beads (see Example 1 and Fig. 13) in 50 mM MOPS buffer supplemented with 2 mM CaCl₂ (pH 7.0) and incubated for 15 minutes at 37 °C. The beads were separated from the collagenase on a magnetic stand and washed with 100 µl MOPS buffer (pH 7.0). The supernatant containing the collagenase was transferred to a 96 well plate and mixed with 10 µl of P-Check substrate. Collagenase activity was determined by the detection of the change of fluorescence intensity (RFU) in a kinetic mode every 60 seconds for at least 30 minutes on a Cytation 5 Multi-Mode-Reader (BioTek). Up to 0.27 µM αGlu-C12 lead to an about 90 % reduction of the collagenase activity in comparison to the untreated collagenase (positive control) (Fig. 16).

### Example 5: Testing of the functional protein denaturing effect of coupled 5-N-carboxamido-2-pyrrolidone-N'-acetamido-N'-n-dodecyl propane-1,3-diamine (Py-Acetyl-C12), in comparison to 5-N-carboxamido-2-pyrrolidone-N'-acetamido-N'-n-dodecyl propane-1,3-diamine (Py-Acetyl-C12) not coupled: Confirming the binding site at the acyclic secondary amine of the diaminesby acetylation of Py-C12 at this site

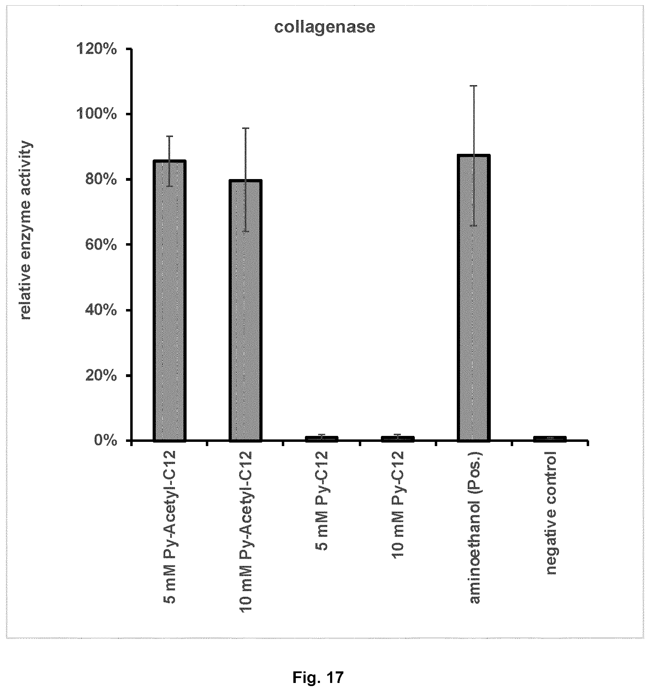

In this experiment, an attempt was made to couple 5 mM and 10 mM acetylated Py-C12, 5-*N*-carboxamido-2-pyrrolidone-*N*'-acetamido-*N*'-n-dodecyl propane-1,3-diamine (Py-Acetyl-C12), to *N*-hydroxysuccinimide (NHS)-activated magnetic beads in analogy to Example 1. Subsequent functional testing of these Py-Acetyl-C12 beads showed that the collagenase could not be inactivated in comparison to the positive control (aminoethanol, Pos.). In contrast to these results, uncoupled Py-Acetyl-C12 showed nearly 100% inactivation of the collagenase (Fig. 17). These results confirm that the Py-Acetyl-C12 could not be coupled to the NHS-activated magnetic beads because this binding site is no longer available due to the acetylation.

### Example 6: Coupling of C12 and Bis-C12 to cellulose scaffolds by condensation reaction and testing their biocidal efficacy

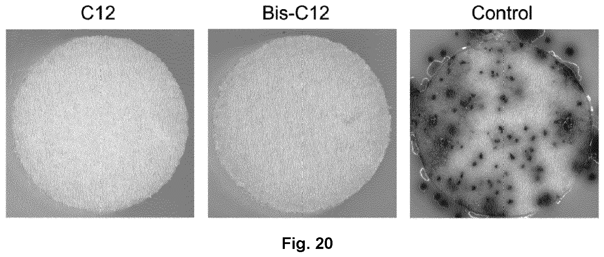

In this experiment, cellulose sheets were coupled to *N*-dodecyl-1,3-diamino propane (C12) (Fig. 18) and *N*'-(3-aminopropyl)-*N*'-n-dodecyl-1,3-diamino propane (Bis-C12) (Fig. 19). The Malaprade reaction followed by reductive aldimine condensation was used for covalent binding of diamino propane derivatives. After the reduction reaction with cyanoborohydride followed by intensive washing steps, cellulose sheets were inoculated with a β-galactosidase-expressing *E. coli* strain. In contrast to the control, cellulose sheets coupled to C12 or Bis-C12 showed a pronounced biocidal activity (Fig. 20).

Fig. 20 shows that cellulose scaffolds coupled to C12 and Bis-C12 exhibit biocidal activity. In a first step, round sterile cellulose sheets were treated with sodium periodate (100 mM) for 1 h at room temperature, followed by intensive washing steps. Thereafter, samples were incubated with *N*-dodecyl-1,3-diamino propane (C12) and *N*'-(3-aminopropyl)-*N*'-n-dodecyl-1,3-diamino propane (Bis-C12), respectively, (5 mM), each for 20 h at 37 °C. As a control, the samples were treated with water. After incubation with sodium cyanoborohydride (4 mg/ml) in borate buffer (50 mM, pH 8.5) for 2 h at room temperature, samples were washed 5 times with water at 37 °C for 10 min each. Then, cellulose scaffolds were inoculated with a β-galactosidase-expressing *E. coli* strain and incubated at 37 °C for 2 days. The biocidal effect of the sample coupled to C12 and Bis-C12 is clearly visible. Blue coloured bacterial colonies appear only on the control sample.

### Example 7: Testing the reactivity of 5-N-carboxamido pyrrolidone-N'-n-dodecyl propane-1,3-diamine (Py-C12) towards cyanuric chloride

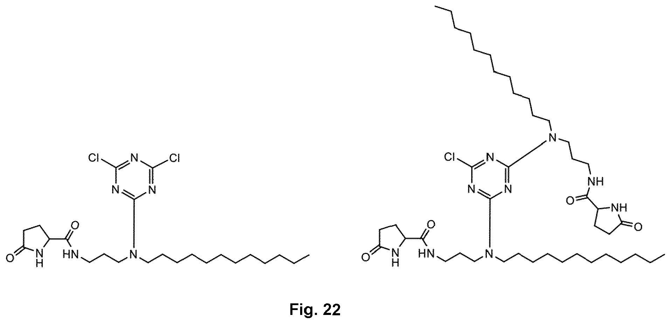

Cyanuric chloride (Fig. 21) was treated with 3 eq. of Py-C12 in chloroform as an inert solvent at ambient temperature for three days while stirring. Analytical samples were collected and any reactive species within were quenched with methanol. Subsequent analysis with mass spectrometry (MALDI-MS) revealed a disubstituted reaction product of triazine and Py-C12 (Fig. 22). These findings clearly indicate that the acyclic secondary amino group reacts with cyanuric chloride yielding a disubstitute depending on the molar ratios and reaction conditions at ambient temperatures.

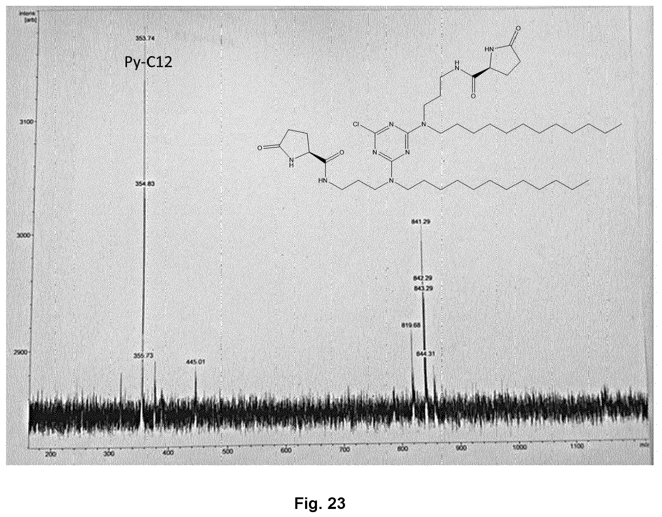

Fig. 23 shows the MALDI-MS spectrum demonstrating the characteristic peak fordi-(5-N-carboxamido-2-pyrrolidone-N'-n-dodecyl propane-1,3-diamine (Py-C12)-adduct to trichlorotriazine.

### Example 8: Two-step coupling procedure of 5-N-carboxamido-2-pyrrolidone-N'-n-dodecyl propane-1,3-diamine (Py-C12), N-dodecyl-1,3-diamino propane (C12) and N'-(3-aminopropyl)- N'-n-dodecyl-1,3-diamino propane (Bis-C12) to cellulose

With proof of the feasibility of the coupling reaction between 5-*N*-carboxamido-2-pyrrolidone-*N'*-n-dodecyl propane-1,3-diamine (Py-C12) and cyanuric chloride, a cross coupling methodology on cellulose was investigated. 5-*N*-carboxamido-2-pyrrolidone-*N*'-n-dodecyl propane-1,3-diamine (Py-C12), *N*-dodecyl-1,3-diamino propane (C12) and *N'-*(3-aminopropyl)-*N*'-n-dodecyl-1,3-diamino propane (Bis-C12) were coupled to cellulose sheets in a tandem procedure using cyanuric chloride as linking agent (Fig. 24, 25 and 26). First, round sterile cellulose sheets (8 mm in diameter) were incubated with the linking agent cyanuric chloride (5% (w/v) in dioxane/xylene (w/w) 1:1), followed by intensive washing steps. After drying, samples were incubated with 5-*N*-carboxamido-2-pyrrolidone-*N'*-n-dodecyl propane-1,3-diamine (Py-C12), *N*-dodecyl-1,3-diamino propane (C12), or *N*'-(3-aminopropyl)-*N*'-n-dodecyl-1,3-diamino propane (Bis-C12) (1 % (w/v) each). The samples were then washed and dried. The coupling procedure was carried out as described by Smith III and Lenhoff (Smith III, Nathan L. & Howard M. Lenhoff. "Covalent Binding of Proteins and Glucose-6-Phosphate Dehydrogenase to Cellulosic Carriers Activated with s-Triazine Trichloride". Analytical Biochemistry, 61, 392-415: 1974).

### Example 9: Inactivation of cellulase by coupled Py-C12, C12 and Bis-C12 to cellulose sheets

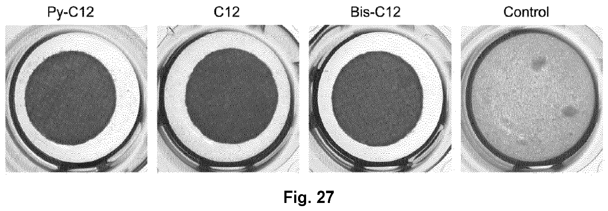

In this experiment, cellulose sheets were covalently bound to 5-*N*-carboxamido-2-pyrrolidone-*N*'-n-dodecyl propane-1,3-diamine (Py-C12), *N*-dodecyl-1,3-diamino propane (C12) and *N*'-(3-aminopropyl)-*N*'-n-dodecyl-1,3-diamino propane (Bis-C12). Cyanuric chloride was used for covalent binding. To evaluate the effect of a covalent bond, cellulose sheets were intensively washed and then incubated with the enzyme cellulase. In contrast to the control, cellulose sheets covalently bound to Py-C12, C12, or Bis-C12 were protected from cellulase digestion due to enzyme inhibition of Py-C12, C12 and Bis-C12 (Fig. 27).Fig. 27 shows that cellulose scaffolds covalently bound to Py-C12, C12 and Bis-C12 inhibit cellulase activity and maintain the structural integrity. Round sterile cellulose sheets (8 mm in diameter) were incubated with the linking agent cyanuric chloride (5 % (w/v) in dioxane/xylene (w/w) 1:1) for 30 min at room temperature, followed by intensive washing steps. After drying, samples were incubated with 5-*N-*carboxamido-2-pyrrolidone-*N*'-n-dodecyl propane-1,3-diamine (Py-C12), *N*-dodecyl-1,3-diamino propane (C12), or *N*'-(3-aminopropyl)-*N*'-n-dodecyl-1,3-diamino propane (Bis-C12) (1 % (w/v) each) for 20 h at 50 °C. The control was treated with water instead of one of the 1,3-diamino propanes. Subsequently, samples were washed 5 times with water at 37 °C for 10 min each and incubated in cellulase solution (1 mg/ml in 50 mM citrate buffer pH 4.9) at 37 °C for 28 days. The data demonstrate that, in contrast to the cellulose sheets coupled to Py-C12, C12 and Bis-C12, the untreated control scaffold was digested by the non-inhibited cellulase.

### Example 10: Testing the biocidial efficacy of coupled Py-C12, C12 and Bis-C12 to cellulose scaffolds

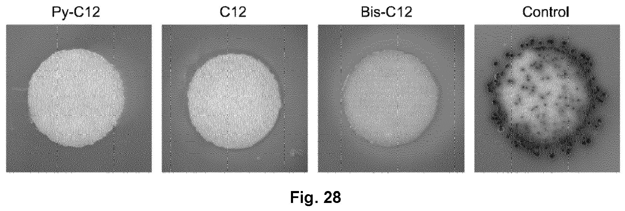

In this experiment, cellulose sheets were covalently bound to 5-*N*-carboxamido-2-pyrrolidone-/V'-n-dodecyl propane-1,3-diamine (Py-C12), *N*-dodecyl-1,3-diamino propane (C12), or *N*'-(3-aminopropyl)-*N*'-n-dodecyl-1,3-diamino propane (Bis-C12). Cyanuric chloride was used for covalent binding of Py-C12, C12 and Bis-C12 as described below. After washing, cellulose sheets were inoculated with a β-galactosidase-expressing *E. coli* strain. In contrast to the control, cellulose sheets covalently bound to Py-C12, C12, or Bis-C12 showed biocidal activity (Fig. 28).

Fig. 28 shows that cellulose scaffolds coupled to Py-C12, C12 and Bis-C12 exhibit a pronounced biocidal activity. In a first step, round sterile cellulose sheets (8 mm in diameter) were incubated with the linking agent cyanuric chloride (1 % (w/v) in dioxane/xylene (w/w) 1:1) for 30 min at room temperature, followed by intensive washing steps. After drying, samples were incubated with 5-*N*-carboxamido-2-pyrrolidone-*N*'-n-dodecyl propane-1,3-diamine (Py-C12), *N*-dodecyl-1,3-diamino propane (C12), and *N'-*(3-aminopropyl)-*N*'-n-dodecyl-1,3-diamino propane (Bis-C12) (1 % (w/v), each for 20 h at 55 °C. As a control, the samples were treated with water. Thereafter, all samples were washed five times for 10 min each with water at 37 °C. Then, cellulose sheets were inoculated with a β-galactosidase-expressing *E. coli* strain and incubated at 37 °C for 7 days. The biocidal effect of the sample coupled to Py-C12, C12 and Bis-C12 is clearly visible. Blue coloured bacterial colonies appear only on the control sample.

## Claims

1. A product of formula (I): 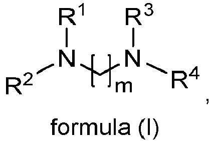 with
m being an integer from 1 to 6,
R¹ being H,
R² and R³ being independently selected from H, a polar protic or polar aprotic substituent independently selected from a saccharide, a polyalcohol, a nucleic acid, an amino acid or an amino acid derivative, a peptide, a protein or a protein derivative, an organic acid, including a carboxylate, a sulfonate, a phosphate, or a substituent selected from
CH₃, C₂H₅, 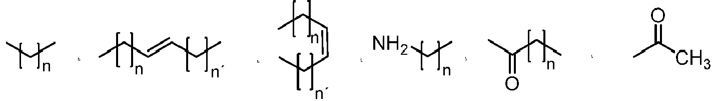 or 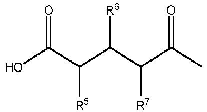 or L-S with L being a linker and S being a substrate,
with one of R⁵, R⁶ and R⁷ being NH₂ or NH-L-S, and the other being H, and
with n and n' being independently an integer from 1 to 25
and with the proviso that either at least R² or R³ is L-S and/or at least one of R⁵, R⁶ and R⁷ is NH-L-S
and with R⁴ being selected from
H, CH₃, C₂H₅, 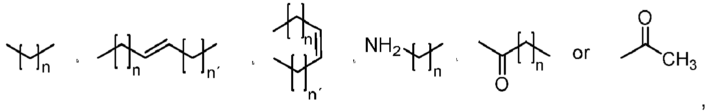
with n and n' being an integer from 1 to 25.

2. The product of claim 1, wherein R² is H, L-S, or an amino acid or an amino acid derivative, wherein the amino acid or amino acid derivative is selected from the group consisting of: 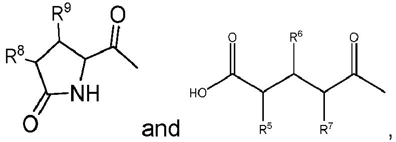 with R⁸ and R⁹ being selected from
H, XH, 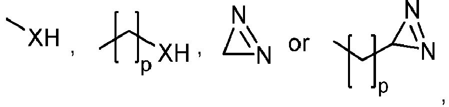 with p being an integer from 0 to 20 and with X being O or S and with R⁵, R⁶ or R⁷ being NH₂ or NH-L-S, and the other being H,
with R³ being selected from H, L-S or 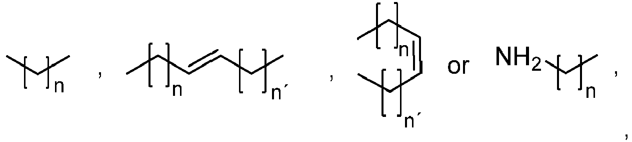
with R⁴ being selected from 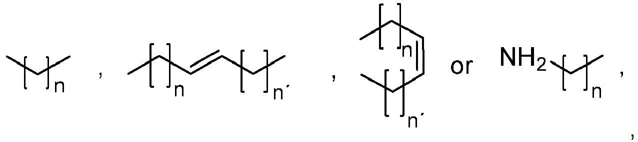
and with the proviso that R² or R³ is L-S or one of R⁵, R⁶ and R⁷ is NH-L-S.

3. The product of claim 2, wherein R² is an amino acid that is pyroglutamic acid of formula (III) 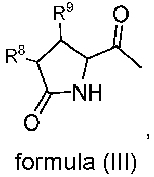
with R⁸ and R⁹ both being H,
and with R³ being L-S and R⁴ being 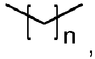 with n being an integer from 8 to 12.

4. The product of claim 2, wherein R² is 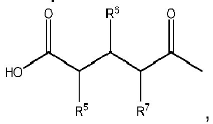
with R⁶ or R⁷ being NH₂ or NH-L-S and the other of R⁵, R⁶, and R⁷ being H,
and with R³ being H or L-S and R⁴ being 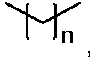 with n being an integer from 8 to 12, with the provision that either R³ is L-S or R⁵ or R⁷ is NH-L-S.

5. The product of claim 2, wherein R² is L-S and R³ is selected from 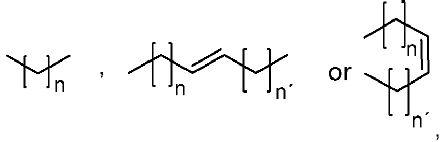 with n and n' being an integer from 2 to 11 and with R⁴ being selected from H or 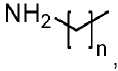 with n being an integer from 2 to 11.

6. The product of any of claims 1 to 5, wherein the linker L is bound to the nitrogen atom(s) and/or to the substrate S via a functional group derived from isothiocyanate (S=C=N-), isocyanate (O=C=N-), active ester (e.g. N-hydroxysuccinimide-active ester, perfluorophenyl active ester), halide (e.g. F⁻, Cl⁻, Br, I⁻), nitrile (CN-), aryl sulfonyl halide, alkyl sulfonyl halide, aldehyde, ketone, dialdehyde, epoxide, di- and polydentate epoxy ether, halogenated N-heterocycle, aryl halide, alkyl halide, carboxylic acid ester, imidoester, carbodiimide, double or triple bond, hydroxyl, peroxide, carboxylate, carbonate, amine, anhydride, ester, ether, thiol or sulfonate.

7. The product of any of claims 1 to 6, wherein the substrate comprises a polymer, glass, ceramic, metal or textile.

8. The product of claim 7, wherein the substrate comprises a polymer selected from a polysaccharide or a polyalcohol.

9. The product of claim 8, wherein the substrate comprises cellulose.

10. A method for preparing a product of formula (I) of any of claims 1 to 9, comprising the steps of:
(a) reacting a compound of formula (II) 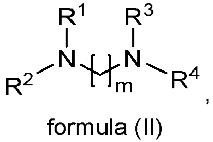
with m being an integer from 1 to 6, and
R¹ being H,
R² and R³ being independently selected from H, a polar protic or polar aprotic substituent independently selected from a saccharide, a polyalcohol, nucleic acid, an amino acid or an amino acid derivative, a peptide, a protein or a protein derivative, a heterocyclic compound, an organic acid, including a carboxylate, sulfonate, phosphate or a substituent selected from
CH₃, C₂H₅, 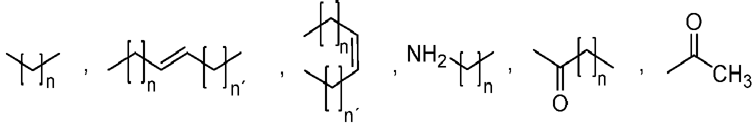 or 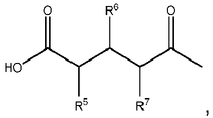
with one of R⁵, R⁶ and R⁷ being NH₂, and the other being H, and
with n and n' being an integer from 1 to 25 and with
R⁴ being selected from
H, CH₃, C₂H₅, 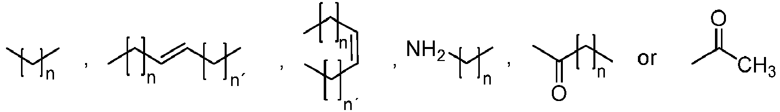
, and with n and n' being an integer from 1 to 25,
with a linking agent and optionally with a reducing agent; and
(b) optionally reacting the product of step (a) with a substrate.

11. The method of claim 10, wherein the compound of formula (II) is selected from the group consisting of *N*'-(3-aminopropyl)-*N*'-n-dodecyl-1,3-diamino propane (Bis-C12), *N*-oleyl-1,3-diamino propane (Oleyl-C12), *N*-dodecyl-1,3-diamino propane (C12), 5-*N*-carboxamido-2-pyrrolidone-*N*'-n-dodecyl propane-1,3-diamine (Py-C12), *N*-(α-glutaminyl amido)-*N*'-n-dodecyl propane-1,3-diamine (αGlu-C12) and *N*-(γ-glutaminyl amido)-*N*'-n-dodecyl propane-1,3-diamine (γGlu-C12).

12. The method of any of claims 10 or 11, wherein the compound of formula (II) is selected from the group consisting of 5-*N*-carboxamido-2-pyrrolidone-*N*'-n-dodecyl propane-1,3-diamine (Py-C12), *N*-dodecyl-1,3-diamino propane (C12), *N*'-(3-aminopropyl)-*N*'-n-dodecyl-1,3-diamino propane (Bis-C12), and *N*-(α-glutaminyl amido)-*N*'-n-dodecyl propane-1,3-diamine (αGlu-C12).

13. The method of any of claims 10 to 12, wherein the compound of formula (II) is 5-*N-*carboxamido-2-pyrrolidone-*N*'-n-dodecyl propane-1,3-diamine (Py-C12).

14. The method of any of claims 10 to 13, wherein the linking agent is a compound comprising at least one functional group selected from the group consisting of isothiocyanate (S=C=N-), isocyanate (O=C=N-), active ester (e.g. *N-*hydroxysuccinimide active ester, perfluorophenyl active ester), halide (e.g. F⁻, Cl⁻, Br , I⁻), nitrile (CN-), aryl sulfonyl halide, alkyl sulfonyl halide, aldehyde, ketone, dialdehyde, epoxide, di- and polydentate epoxy ether, halogenated N-heterocycle, aryl halide, alkyl halide, carboxylic acid ester, imidoester, carbodiimide, double or triple bond, hydroxyl, peroxide, carboxylate, carbonate, amine, anhydride, ester, ether, thiol or sulfonate.

15. The method of any of claims 10 to 14, wherein the linking agent is N-hydroxysuccinimide (NHS)-active ester, or trichlorotriazine.

16. The method of any of claims 10 to 15, wherein the linking agent comprises a dendrimer and/or more than one functional group for bond formation with the compound of formula (II).

17. A product of formula (I) prepared by a method according to any of claims 10 to 16.

18. Use of a product of formula (I) of any of claims 1 to 9 for interfering with the function and/or the structure of a polypeptide.

19. The use of claim 18, wherein the polypeptide is an enzyme selected from an oxidoreductase, a transferase, a hydrolase or an isomerase.

20. The use of claim 19, wherein the polypeptide is an enzyme selected from an oxidoreductase or a hydrolase.

21. The use of claim 20, wherein the oxidoreductase is selected from a dioxygenase or a peroxidase.

22. The use of claim 20, wherein the hydrolase is selected from a ribonuclease (RNAse), a deoxyribonuclease (DNAse), thrombin, an elastase and/or a collagenase.

23. The use of claim 18 to 22, wherein the use of the product of formula (I) is for inhibiting an enzyme and wherein the enzyme inhibition of the product of formula (I) is at least 80 % of the enzyme inhibition of the uncoupled compound of formula (II).

24. Use of any of claims 18 to 23, wherein R² is an amino acid, and wherein the amino acid is pyroglutamic acid of formula (III) 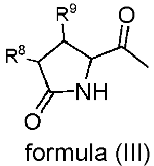
with R⁸ and R⁹ being H and wherein one of R³ and R⁴ is 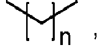
with n being 11 and the other being H.

25. Use of a compound of formula (II): 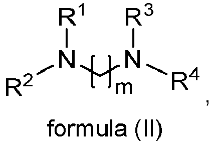
with m being an integer from 1 to 6 and
R¹ being H and with
R² and R³ being independently selected from H, a polar protic or polar aprotic substituent independently selected from a saccharide, a polyalcohol, a nucleic acid, an amino acid or an amino acid derivative, a peptide, a protein or a protein derivative, a heterocyclic compound, an organic acid, including a carboxylate, sulfonate, phosphate or a substituent selected from CH₃, C₂H₅, 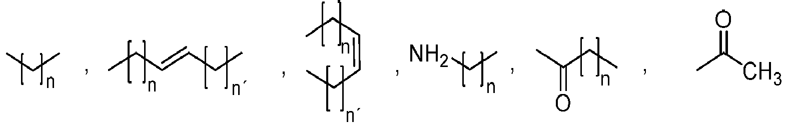 or 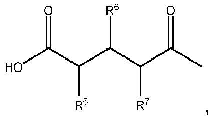
with one of R⁵, R⁶ or R⁷ being NH₂, and the other being H, and
with n and n' being an integer from 1 to 25 and with
R⁴ being selected from
H, CH₃, C₂H₅, 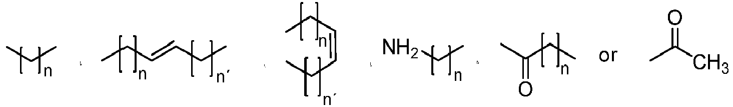
and with n and n' being an integer from 1 to 25,
for preparing a product of formula (I) of any of claims 1 to 8.
